# FASCICULE DE BREVET EUROPEEN

(11) **EP 3 287 363 B1**
(45) Date de publication et mention de la délivrance du brevet: **28.10.2020**
(21) Numéro de dépôt: 17182413.9
(22) Date de dépôt: 20.07.2017
(51) Int. Cl.: B64C 3/48, B64C 3/54

(54) **EXTENSION DE VOILURE POUR UNE AILE D'AERONEF**
TRAGFLÄCHENERWEITERUNG FÜR EINEN FLÜGEL EINES LUFTFAHRZEUGS
AEROFOIL EXTENSION FOR AN AIRCRAFT WING

(30) Priorité: 24.08.2016 FR 1657904
(43) Date de publication de la demande: 28.02.2018
(73) Titulaire: Airbus (S.A.S.), 31700 Blagnac (FR)
(72) Inventeur: JULE, Pascal, 31170 TOURNEFEUILLE (FR)
(74) Mandataire: Gicquel, Olivier Yves Gérard

(56) Documents cités:
- EP-A2- 0 304 660
- US-A1- 2010 084 516
- US-A1- 2010 116 937
- US-A1- 2015 251 747

## Description

### DOMAINE TECHNIQUE

La présente invention concerne une aile d'aéronef comportant une extension de voilure.

### ETAT DE LA TECHNIQUE ANTERIEURE

Un aéronef comporte classiquement un fuselage de chaque côté duquel est fixée une aile. Afin d'améliorer la traînée de l'aéronef, il est connu d'allonger les ailes, comme dans le document US 2010/084516. Un tel allongement entraîne un surpoids pour l'aéronef du fait de l'ajout de différents composants, comme par exemple la voilure, la structure de soutien de la voilure, et les différents actionneurs. Selon certaines configurations, ces différents ajouts annulent le gain réalisé sur la traînée.

### EXPOSE DE L'INVENTION

Un objet de la présente invention est de proposer une extension de voilure qui peut modifier son profil et en particulier ses caractéristiques aérodynamiques et mécaniques en fonction des conditions de vol.

A cet effet, est proposée une une aile d'aéronef selon la revendication 1.

Selon un autre mode de réalisation particulier, la partie extensible de la paroi d'intrados ou la partie extensible de la paroi d'extrados est du type silicone.

Avantageusement, la partie semi-rigide présente une raideur plus faible que celle de la première partie rigide et de la deuxième partie rigide de l'autre paroi.

Selon une variante, la partie semi-rigide est réalisée en un matériau élastomère.

Selon une autre variante la partie semi-rigide est réalisée en un matériau bi-laminé.

Avantageusement, la structure déformable présente au moins deux poutrelles, une première poutrelle présentant une première extrémité fixée articulée à l'élément structurel et une deuxième extrémité fixée articulée à la deuxième partie et à une première extrémité d'une deuxième poutrelle, la deuxième extrémité de la deuxième poutrelle étant fixée articulée à la paroi d'intrados, et ainsi de suite de proche en proche, et chaque poutrelle présente une longueur qui diminue quand la température diminue.

Selon une autre variante, l'extension de voilure comporte une poutrelle fixée par une extrémité à l'élément structurel et par l'autre extrémité au niveau du bord de fuite, et la poutrelle présente une longueur qui diminue quand la température diminue.

Selon une autre variante la structure déformable comporte un ensemble de bielles parallèles entre elles, lesdites bielles comportant à chaque extrémité une rotule solidaire respectivement à la paroi d'intrados et à la paroi d'extrados.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de dessus d'un aéronef selon l'invention,
les Figs. 2 à 6 montrent des vues en coupe de l'extension de voilure selon la ligne II-II de la Fig. 1 pour différents modes de réalisation de l'invention, et
la Fig. 7 montre une vue en coupe de l'extension de voilure selon la ligne II-II de la Fig. 1 dans deux positions différentes pour le mode de réalisation de la Fig. 3.

### EXPOSE DETAILLE DE MODES DE REALISATION

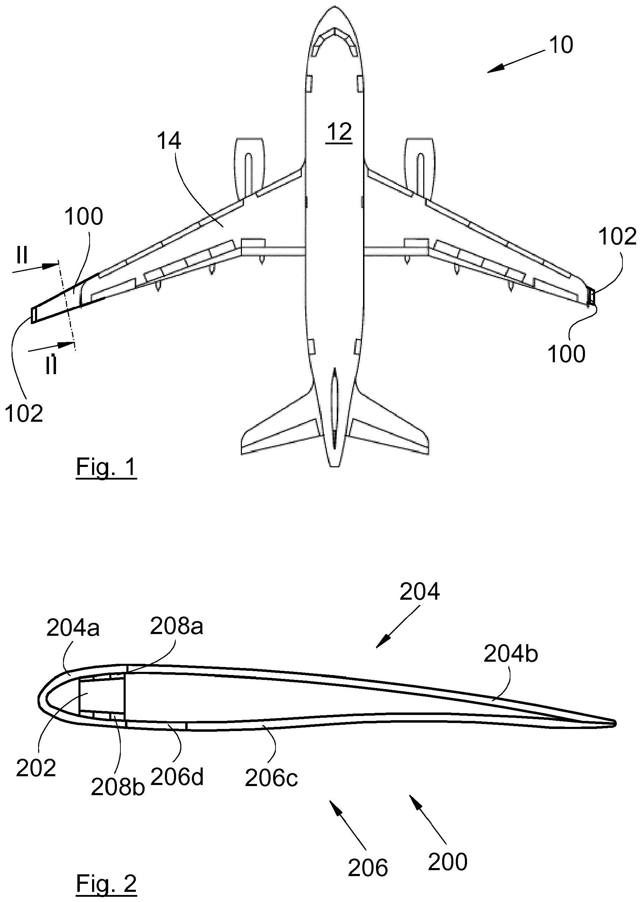

La Fig. 1 montre un aéronef 10 qui comporte un fuselage 12 auquel est fixée de part et d'autre une aile 14. Classiquement, au cours d'un vol de l'aéronef 10, il y a différentes phases comme le décollage, la phase de croisière et l'atterrissage. Pour chacune de ces phases, les caractéristiques aérodynamiques à mettre en œuvre sont différentes.

Chaque aile 14 est équipée d'une extension de voilure 100 qui est montée coulissante à l'intérieur de l'aile 14 et qui peut prendre alternativement une position rentrée (à tribord sur la Fig. 1) ou une position sortie (à bâbord sur la Fig. 1).

Chaque extension de voilure 100 est montée ici de manière télescopique à l'intérieur de l'aile 14 qui est équipée de moyens de déplacement qui font passer l'extension de voilure 100 de la position rentrée à la position sortie et inversement. Les moyens de déplacement comportent par exemple des coulisses et des actionneurs comme des vérins ou des moteurs.

Dans le mode de réalisation de l'invention présenté sur la Fig. 1, l'extension de voilure 100 est équipée, à son extrémité libre, d'une ailerette 102 (aussi appelée « winglet »), mais l'invention peut s'appliquer de la même manière pour une extension de voilure sans ailerette.

Dans les différents modes de réalisation qui sont décrits en rapport avec les Figs. 2 à 7, les extensions de voilure 200, 300, 400, 500 et 600 présentent une paroi d'extrados 204 et une paroi d'intrados 206 qui définissent entre eux un profil de l'extension de voilure. Les extensions de voilure présentent également un renfort structurel 202 arrangé le long du bord d'attaque de l'extension de voilure 200, 300, 400, 500, 600. Le profil de chaque extension de voilure prend la forme d'un profil en aile.

Dans le mode de réalisation de l'invention présenté sur les Figs. 2 à 7, le renfort structurel prend la forme d'un longeron 202 arrangé entre la paroi d'extrados 204 et la paroi d'intrados 206 juste en aval et le long du bord d'attaque de l'extension de voilure, mais il peut prendre une autre forme comme par exemple un renforcement local de la structure du bord d'attaque. De la même manière, le longeron 202 présente ici une section rectangulaire, mais il peut prendre d'autres formes comme par exemple une section en Z pour absorber davantage les modifications du profil.

Dans chaque mode de réalisation, l'extension de voilure 200, 300, 400, 500, 600 comporte des moyens pour modifier le profil de l'extension de voilure 200, 300, 400, 500, 600 en fonction des conditions de vol de l'aéronef 10 et donc de l'extension de voilure 200, 300, 400, 500, 600. Les modifications du profil de l'extension de voilure 200, 300, 400, 500, 600 concernent en particulier les caractéristiques aérodynamiques et mécaniques de l'extension de voilure comme son profil et plus particulièrement la cambrure et l'épaisseur du profil.

Le centre aérodynamique de portance de l'extension de voilure 200, 300, 400, 500, 600 est en aval du centre de torsion structurel de l'extension de voilure 200, 300, 400, 500, 600.

En particulier, l'extension de voilure 200, 300, 400, 500, 600 présente un premier profil qui est utilisé durant la phase de croisière d'un vol et qui est rigide et un deuxième profil qui est utilisé durant les autres phases du vol, comme l'atterrissage et le décollage, et qui est rigide mais déformé par rapport au premier profil avec une modification de la cambrure et de l'épaisseur de l'extension de voilure de manière à réduire localement l'incidence voilure, c'est-à-dire l'angle entre le flux d'air et la direction bord d'attaque / bord de fuite, et permettre ainsi le déchargement des efforts par rotation de l'extension de voilure dont la structure n'a plus besoin d'être renforcée.

En particulier, les moyens sont prévus pour maintenir la rigidité du profil durant les différentes phases du vol, tout en permettant sa déformation entre deux formes rigides en dehors de la phase de croisière. En particulier, la déformation consiste en un assouplissement permettant de décharger les efforts subis par l'extension de voilure au contact du flux d'air. La souplesse souhaitée dépend des efforts au niveau de l'extension de voilure transmis vers le centre de l'aile 14 et donc de l'incidence de l'aile 14 et de la structure de l'aéronef 10.

Cet assouplissement s'accompagne d'une modification de la cambrure et d'un rapprochement de la paroi d'extrados 204 et de la paroi d'intrados 206.

Dans chacun des modes de réalisation présentés sur les Figs. 1 à 5 et 7, la paroi d'extrados 204 comprend une première partie 204a qui s'étend depuis le bord d'attaque de l'extension de voilure vers l'aval, globalement jusqu'au tiers avant de la paroi d'extrados 204, ce qui correspond ici à la partie aval du longeron 202, et une deuxième partie 204b entre la première partie 204a et le bord de fuite de l'extension de voilure.

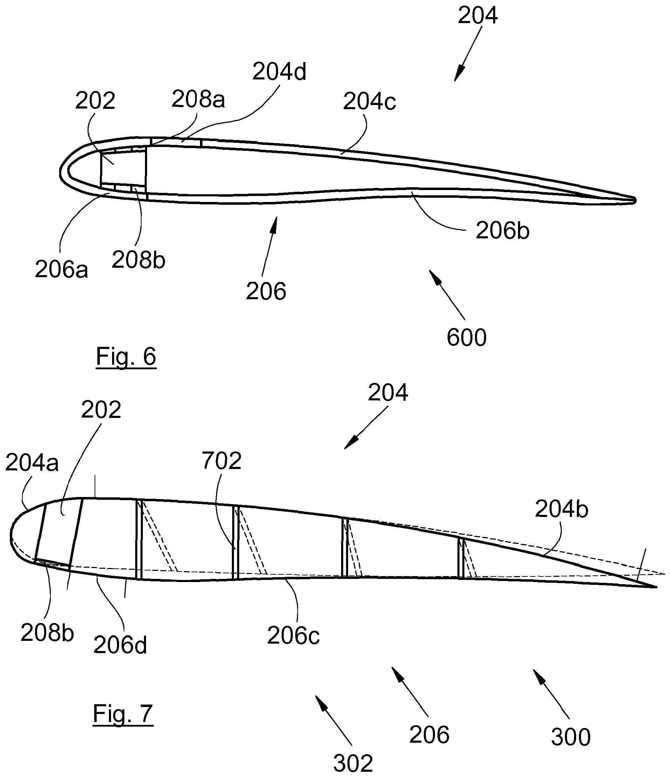

Dans chacun des modes de réalisation présentés sur les Figs. 1 à 5 et 7, la paroi d'intrados 206 comprend une partie rigide 206c qui s'étend depuis le bord de fuite de l'extension de voilure vers l'amont, globalement jusqu'au tiers avant de la paroi d'intrados 206 et une partie extensible 206d du type silicone qui s'étend vers l'amont depuis la partie rigide 206c, ici la partie extensible 206d s'étend jusqu'à la partie aval du longeron 202. Comme cela est montré plus particulièrement sur la Fig. 7, la modification du profil entraîne un allongement de la paroi d'intrados 206 qui est possible du fait de la présence de la partie extensible 206d.

Dans chacun des modes de réalisation présentés sur les Figs. 1 à 5 et 7, la première partie 204a et la partie rigide 206c sont réalisées dans un matériau rigide, comme par exemple un matériau métallique ou plastique ou autre comme le carbone ou l'aluminium.

La deuxième partie 204b présente une raideur plus faible que celle de la première partie 204a et que la partie rigide 206c de l'autre paroi, ici la paroi d'intrados 206, et est par exemple réalisée en résine élastomère avec des renforts fibreux.

La Fig. 2 montre l'extension de voilure 200 selon un premier mode de réalisation où le longeron 202 est fixé au profil par des moyens de fixation 208a-b.

Selon une première variante, la deuxième partie 204b peut être réalisée en un matériau élastomère tel que du silicone qui subit des déplacements induits par la cinématique des autres éléments mobiles.

Selon une deuxième variante, la deuxième partie 204b peut être réalisée en un matériau bi-laminé qui présente deux positions stables et qui nécessite l'application d'un effort sur le matériau bi-laminé pour passer d'une position à l'autre. Un matériau bi-laminé comprend deux plaques fixées l'une sur l'autre et réalisées dans des matériaux de raideurs différentes. Il peut s'agir par exemple, d'une tôle en aluminium ou en fibres de verre sur une structure peau en carbone. L'interstice entre ces deux plaques peut être laissé vide ou rempli d'éléments intermédiaires comme des élastomères.

Ainsi, selon les efforts qui s'exercent sur la deuxième partie 204b, deux positions stables peuvent être obtenues, par exemple une position conforme à celle représentée sur la Fig. 2 et une position dans laquelle la deuxième partie 204b est plus rentrée et donc plus proche de la paroi d'intrados 206.

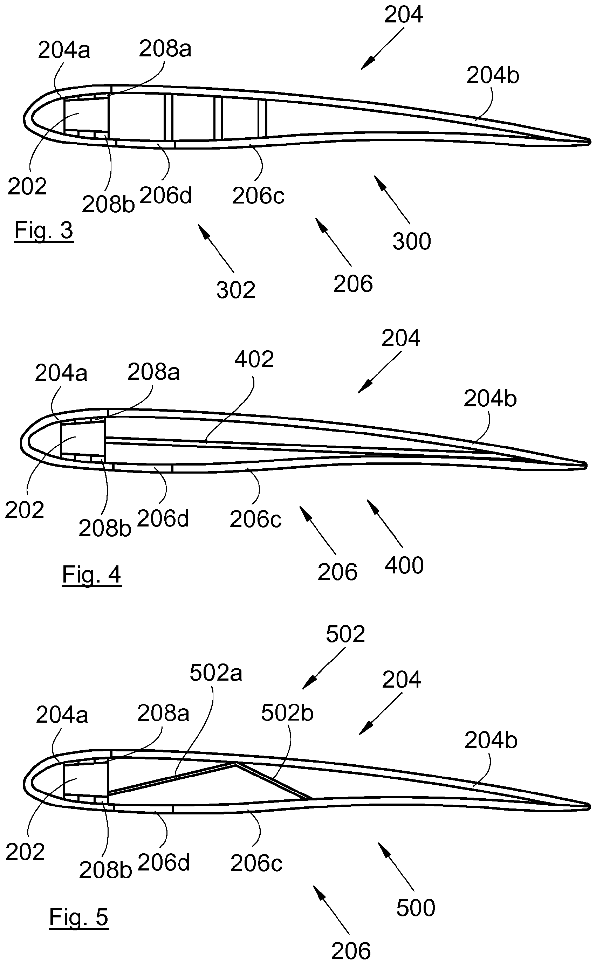

La Fig. 3 montre l'extension de voilure 300 selon un deuxième mode de réalisation où le longeron 202 est fixé au profil par des moyens de fixation 208a-b.

La deuxième partie 204b peut être réalisée en un matériau élastomère ou en un matériau bi-laminé ou tout matériau suffisamment souple pour accepter une certaine déformation sans être détérioré.

Entre la paroi d'intrados 206 et la paroi d'extrados 204 est agencée une structure déformable 302 prévue pour s'aplatir sous l'action de pressions aérodynamiques s'exerçant sur la paroi d'extrados 204 et la paroi d'intrados 206.

La structure déformable 302 est par exemple une structure dite "à double articulation rotulée" comportant des éléments structurels rigides articulés autour d'articulations souples en dehors de la phase de croisière, c'est-à-dire sous une faible incidence et/ou de faibles charges.

La Fig. 7 montre l'extension de voilure 300 dans une première position en traits pleins et dans une deuxième position en traits pointillés. La structure déformable 302 prend ici la forme d'un ensemble de bielles 702 qui sont parallèles. Chaque extrémité de chaque bielle 702 est articulée sur une rotule où une rotule est solidaire de la paroi d'intrados 206, plus particulièrement de la partie rigide 206c, et où l'autre rotule est solidaire de la paroi d'extrados 204, plus particulièrement de la deuxième partie 204b. La structure déformable 302 reste rigide lorsque la pression qui s'exerce est parallèle aux bielles702 et la structure déformable 302 s'affaisse sous forme d'un parallélogramme lorsque la pression qui s'exerce n'est plus parallèle. La pression est due aux pressions aérodynamiques sur la paroi d'extrados 204 et la paroi d'intrados 206. L'affaissement de la structure déformable 302 va rapprocher la paroi d'extrados 204 et la paroi d'intrados 206.

La Fig. 4 montre l'extension de voilure 400 selon un troisième mode de réalisation où le longeron 202 est fixé au profil par des moyens de fixation 208a-b.

La deuxième partie 204b peut être réalisée en un matériau élastomère ou en un matériau bi-laminé ou tout matériau suffisamment souple pour accepter une certaine déformation sans être détérioré.

L'extension de voilure 400 présente également une poutrelle 402 fixée par une extrémité au longeron 202 et par l'autre extrémité au niveau du bord de fuite.

La fixation de la poutrelle 402 au longeron 202 est réalisée par l'intermédiaire d'une liaison souple ou articulée.

La fixation de la poutrelle 402 au bord de fuite s'effectue par l'intermédiaire d'une liaison souple ou articulée à la deuxième partie 204b ou à la paroi d'intrados 206 ou aux deux.

La poutrelle 402 présente la propriété de changer de longueur en fonction de son environnement ce qui va induire selon le cas un amincissement ou un élargissement de l'extension de voilure 400.

La poutrelle 402 peut être réalisée en un matériau bi-laminé dont la longueur va changer selon les efforts qui s'exercent sur elle du fait des pressions aérodynamiques sur la paroi d'extrados 204 et la paroi d'intrados 206.

La poutrelle 402 peut être réalisée en un matériau à mémoire de forme dont la longueur va changer selon la température ambiante, et où la longueur diminue quand la température diminue.

La Fig. 5 montre l'extension de voilure 500 selon un quatrième mode de réalisation où le longeron 202 est fixé au profil par des moyens de fixation 208a-b.

La deuxième partie 204b peut être réalisée en un matériau élastomère ou en un matériau bi-laminé ou tout matériau suffisamment souple pour accepter une certaine déformation sans être détérioré.

L'extension de voilure 500 présente également une structure déformable 502 prévue pour s'aplatir sous l'action de pressions aérodynamiques s'exerçant sur la paroi d'extrados 204 et la paroi d'intrados 206.

La structure déformable 502 comporte deux poutrelles 502a-b. Une première poutrelle 502a présente une première extrémité fixée articulée au longeron 202 et une deuxième extrémité fixée articulée à la deuxième partie 204b et à une première extrémité d'une deuxième poutrelle 502b. La deuxième extrémité de la deuxième poutrelle 502b est fixée articulée à la paroi d'intrados 206.

Il est possible d'avoir plus de deux poutrelles 502a-b, la fixation articulée des poutrelles s'effectue alors de proche en proche les unes à la suite des autres, et en alternant une fixation articulée à la deuxième partie 204b et à la paroi d'intrados 206.

Les poutrelles 502a-b présentent la propriété de changer de longueur en fonction de l'environnement ce qui va induire selon le cas un amincissement ou un élargissement de l'extension de voilure 500.

Chaque poutrelle 502a-b peut être réalisée en un matériau bi-laminé dont la longueur va changer selon les efforts qui s'exercent sur elle du fait des pressions sur la paroi d'extrados 204 et la paroi d'intrados 206.

Chaque poutrelle 502a-b peut être réalisée en un matériau à mémoire de forme dont la longueur va changer selon la température ambiante, et où la longueur diminue quand la température diminue.

Dans le mode de réalisation présenté sur la Fig. 6, la paroi d'intrados 206 comprend une première partie 206a depuis le bord d'attaque de l'extension de voilure et qui s'étend vers l'aval globalement jusqu'au tiers avant de la paroi d'intrados 206, ce qui correspond ici à la partie aval du longeron 202, et une deuxième partie 206b entre la première partie 206a et le bord de fuite de l'extension de voilure. La paroi d'extrados 204 comprend une partie rigide 204c qui s'étend depuis le bord de fuite de l'extension de voilure vers l'amont, globalement jusqu'au tiers avant de la paroi d'extrados 204 et une partie extensible 204d du type silicone qui s'étend vers l'amont depuis la partie rigide 204c, ici la partie extensible 204d s'étend jusqu'à la partie aval du longeron 202.

La première partie 206a et la partie rigide 204c sont réalisées dans un matériau rigide, comme par exemple un matériau métallique ou plastique ou autre comme le carbone ou l'aluminium.

La deuxième partie 206b présente une raideur plus faible que celle de la première partie 206a et que la partie rigide 204c de l'autre paroi, ici la paroi d'extrados 204, et est par exemple réalisée en résine élastomère avec des renforts fibreux.

La Fig. 6 montre l'extension de voilure 600 où le longeron 202 est fixé au profil par des moyens de fixation 208a-b.

La Fig. 6 reprend par ailleurs la structure décrite à la Fig. 2, c'est-à-dire que la deuxième partie 206b peut être réalisée en un matériau élastomère ou en un matériau bi-laminé. Mais l'extension de voilure 600 peut reprendre les mêmes structures que celles décrites sur les Figs. 3 à 5 en affectant la première partie et la deuxième partie à la paroi d'intrados et non à la paroi d'extrados.

Dans les différents modes de réalisation présentés, le renfort structurel prend la forme d'un longeron 202 mais ces différents modes de réalisation s'appliquent de la même manière dans le cas d'un renforcement local de la structure du bord d'attaque.

Dans les différents modes de réalisation présentés, le longeron 202 est fixé à la fois à la paroi d'extrados 204 et à la paroi d'intrados 206. Mais selon différents modes de réalisation, il est possible que le longeron 202 soit fixé uniquement à la paroi d'extrados 204 ou à la paroi d'intrados 206.

Les moyens de fixation 208a-b sont par exemple à base d'éléments de visserie et comportent par exemple un élément rigide assurant l'intégrité de la sécurité et un élément souple pour absorber les modifications du profil. Les moyens de fixation 208a-b peuvent prendre la forme d'éléments métalliques traversants avec jeu et des éléments en silicone. Les éléments métalliques ne travaillent alors qu'en cas de défaillance des éléments en silicone.

Dans l'ensemble des modes de réalisation présentés ici, les éléments structurels utilisés ont un faible impact sur le poids de l'aéronef. Ainsi, la traînée de l'aéronef est améliorée sans avoir à alourdir l'aéronef.

## Revendications

1. Aile (14) d'aéronef (10), ladite aile (14) comportant une extension de voilure (100, 200, 300, 400, 500), ladite extension de voilure (100, 200, 300, 400, 500) comportant une paroi d'extrados (204) et une paroi d'intrados (206) la paroi d'extrados (204) et la paroi d'intrados (206) définissant entre elles un profil de l'extension de voilure,
**caractérisée en ce que** l'extension de voilure (100, 200, 300, 400, 500) comporte :
- un élément structurel (202) arrangé le long du bord d'attaque de l'extension de voilure,
- les parois d'extrados et d'intrados (206, 204) sont reliées par une structure déformable (302, 502) sous l'action de pressions aérodynamiques s'exerçant sur la paroi d'extrados (204) et la paroi d'intrados (206) lors du vol de l'aéronef (10),
et **en ce que** :
- la paroi d'extrados (204) comprend une première partie (204a) qui s'étend depuis le bord d'attaque de l'extension de voilure vers l'aval, globalement jusqu'au tiers avant de la paroi extrados (204), la paroi d'intrados (206) comprend une partie rigide (206c) qui s'étend depuis le bord de fuite de l'extension de voilure vers l'amont, globalement jusqu'au tiers avant de la paroi d'intrados (206), la première partie (204a) de la paroi d'extrados (204) et la partie rigide (206c) de la paroi d'intrados (206) étant respectivement réalisées en un matériau rigide, la paroi d'extrados (204) comprend en outre une deuxième partie (204b), désignée partie semi-rigide, entre la première partie (204a) et le bord de fuite de l'extension de voilure, dont la raideur est plus faible que celle de la première partie (204a) de la paroi d'extrados (204), et la paroi d'intrados (206) comprend en outre une partie extensible (206d) qui s'étend vers l'amont depuis la partie rigide (206c) ; ou
- la paroi d'intrados (206) comprend une première partie (206a) qui s'étend depuis le bord d'attaque vers l'aval globalement jusqu'au tiers avant de la paroi d'intrados (206), la paroi d'extrados (204) comprend une partie rigide (204c) qui s'étend depuis le bord de fuite vers l'amont, globalement jusqu'au tiers avant de la paroi d'extrados (204), la première partie (206a) de la paroi d'intrados et la partie rigide (204c) étant respectivement réalisées dans un matériau rigide, la paroi d'extrados (206) comprend en outre une deuxième partie (206b), désignée partie semi-rigide, entre la première partie (206a) et le bord de fuite de l'extension de voilure, dont la raideur est plus faible que celle de la première partie (206a) de la paroi d'intrados (206), et la paroi d'extrados (204) comporte en outre une partie extensible (204d) qui s'étend vers l'amont depuis la partie rigide (204c).

2. Aile (14) d'aéronef (10) selon la revendication 1, **caractérisée en ce que** la partie extensible (206d) de la paroi d'intrados ou la partie extensible (204d) de la paroi d'extrados (204) est du type silicone.

3. Aile (14) d'aéronef (10) selon la revendication 1 ou 2, **caractérisée en ce que** la partie semi-rigide (204b, 206b) est réalisée en un matériau élastomère.

4. Aile (14) d'aéronef (10) selon l'une des revendications 1 à 3, **caractérisée en ce que** la partie semi-rigide (204b, 206b) est réalisée en un matériau bi-laminé.

5. Aile (14) d'aéronef (10) selon l'une quelconque des revendications précédentes, **caractérisée en ce que** la structure déformable (502) présente au moins deux poutrelles (502a-b), une première poutrelle (502a) présentant une première extrémité fixée articulée à l'élément structurel (202) et une deuxième extrémité fixée articulée à la deuxième partie (204b) et à une première extrémité d'une deuxième poutrelle (502b), la deuxième extrémité de la deuxième poutrelle (502b) étant fixée articulée à la paroi d'intrados (206), et ainsi de suite de proche en proche, et **en ce que** chaque poutrelle (502a-b) présente une longueur qui diminue quand la température diminue.

6. Aile (14) d'aéronef (10) selon l'une des revendications 1 à 4, **caractérisée en ce qu'**elle comporte une poutrelle (402) fixée par une extrémité à l'élément structurel (202) et par l'autre extrémité au niveau du bord de fuite, et **en ce que** la poutrelle (402) présente une longueur qui diminue quand la température diminue.

7. Aile (14) d'aéronef (10) selon l'une quelconque des revendications 1 à 4, **caractérisé en ce que** la structure déformable (302) comporte un ensemble de bielles (702) parallèles entre elles, lesdites bielles (702) comportant à chaque extrémité une rotule solidaire respectivement à la paroi d'intrados (206) et à la paroi d'extrados (204).

## Patentansprüche

1. Flügel (14) eines Luftfahrzeugs (10), wobei der Flügel (14) eine Tragflächenverlängerung (100, 200, 300, 400, 500) aufweist, wobei die Tragflächenverlängerung (100, 200, 300, 400, 500) eine Oberseitenwand (204) und eine Unterseitenwand (206) aufweist, wobei die Oberseitenwand (204) und die Unterseitenwand (206) zwischen sich ein Profil der Tragflächenverlängerung definieren,
**dadurch gekennzeichnet, dass** die Tragflächenverlängerung (100, 200, 300, 400, 500) aufweist:
- ein Strukturelement (202), das entlang der Vorderkante der Tragflächenverlängerung angeordnet ist,
- die Ober- und Unterseitenwände (206, 204) durch eine unter der Wirkung von beim Flug des Luftfahrzeugs (10) auf die Oberseitenwand (204) und die Unterseitenwand (206) ausgeübten aerodynamischen Drücken verformbare Struktur (302, 502) verbunden sind,
und dass:
- die Oberseitenwand (204) einen ersten Teil (204a) enthält, der sich von der Vorderkante der Tragflächenverlängerung stromabwärts nach hinten erstreckt, global bis zum vorderen Drittel der Oberseitenwand (204), die Unterseitenwand (206) einen starren Teil (206c) enthält, der sich von der Hinterkante der Tragflächenverlängerung stromaufwärts nach vorne erstreckt, global bis zum vorderen Drittel der Unterseitenwand (206), wobei der erste Teil (204a) der Oberseitenwand (204) bzw. der starre Teil (206c) der Unterseitenwand (206) aus einem starren Material hergestellt sind, die Oberseitenwand (204) außerdem einen zweiten Teil (204b), als halbstarrer Teil bezeichnet, zwischen dem ersten Teil (204a) und der Hinterkante der Tragflächenverlängerung enthält, dessen Steifigkeit geringer ist als diejenige des ersten Teils (204a) der Oberseitenwand (204), und die Unterseitenwand (206) außerdem einen verlängerbaren Teil (206d) enthält, der sich vom starren Teil (206c) nach stromaufwärts erstreckt; oder
- die Unterseitenwand (206) einen ersten Teil (206a) enthält, der sich von der Vorderkante stromabwärts nach hinten global bis zum vorderen Drittel der Unterseitenwand (206) erstreckt, die Oberseitenwand (204) einen starren Teil (204c) enthält, der sich von der Hinterkante stromaufwärts nach vorne global bis zum vorderen Drittel der Oberseitenwand (204) erstreckt, wobei der erste Teil (206a) der Unterseitenwand bzw. der starre Teil (204c) aus einem starren Material hergestellt sind, die Oberseitenwand (206) außerdem einen zweiten Teil (206b), als halbstarrer Teil bezeichnet, zwischen dem ersten Teil (206a) und der Hinterkante der Tragflächenverlängerung enthält, dessen Steifheit geringer ist als diejenige des ersten Teils (206a) der Unterseitenwand (206), und die Oberseitenwand (204) außerdem einen verlängerbaren Teil (204d) aufweist, der sich von dem starren Teil (204c) stromaufwärts nach vorne erstreckt.

2. Flügel (14) eines Luftfahrzeugs (10) nach Anspruch 1, **dadurch gekennzeichnet, dass** der verlängerbare Teil (206d) der Unterseitenwand oder der verlängerbare Teil (204d) der Oberseitenwand (204) von der Art Silikon ist.

3. Flügel (14) eines Luftfahrzeugs (10) nach Anspruch 1 oder 2, **dadurch gekennzeichnet, dass** der halbstarre Teil (204b, 206b) aus einem Elastomermaterial hergestellt ist.

4. Flügel (14) eines Luftfahrzeugs (10) nach einem der Ansprüche 1 bis 3, **dadurch gekennzeichnet, dass** der halbstarre Teil (204b, 206b) aus einem bilaminierten Material hergestellt ist.

5. Flügel (14) eines Luftfahrzeugs (10) nach einem der vorhergehenden Ansprüche, **dadurch gekennzeichnet, dass** die verformbare Struktur (502) mindestens zwei Träger (502a-b) aufweist, wobei ein erster Träger (502a) ein erstes am Strukturelement (202) gelenkig befestigtes Ende und ein zweites am zweiten Teil (204b) und an einem ersten Ende eines zweiten Trägers (502b) gelenkig befestigtes Ende aufweist, wobei das zweite Ende des zweiten Trägers (502b) an der Unterseitenwand (206) gelenkig befestigt ist, und so weiter nach und nach, und dass jeder Träger (502a-b) eine Länge aufweist, die sich verringert, wenn die Temperatur sinkt.

6. Flügel (14) eines Luftfahrzeugs (10) nach einem der Ansprüche 1 bis 4, **dadurch gekennzeichnet, dass** er einen Träger (402) aufweist, der mit einem Ende am Strukturelement (202) und mit dem anderen Ende im Bereich der Hinterkante befestigt ist, und dass der Träger (402) eine Länge aufweist, die sich verringert, wenn die Temperatur sinkt.

7. Flügel (14) eines Luftfahrzeugs (10) nach einem der Ansprüche 1 bis 4, **dadurch gekennzeichnet, dass** die verformbare Struktur (302) eine Einheit von zueinander parallelen Schubstangen (702) aufweist, wobei die Schubstangen (702) an jedem Ende ein Kugelgelenk aufweisen, das mit der Unterseitenwand (206) bzw. mit der Oberseitenwand (204) fest verbunden ist.

## Claims

1. Wing (14) for an aircraft (10), said wing (14) comprising an aerofoil extension (100, 200, 300, 400, 500), said aerofoil extension (100, 200, 300, 400, 500) comprising a suction-side wall (204) and a pressure-side wall (206), the suction-side wall (204) and the pressure-side wall (206) defining between them a profile of the aerofoil extension,
**characterized in that** the aerofoil extension (100, 200, 300, 400, 500) comprises:
- a structural element (202) arranged along the leading edge of the aerofoil extension,
- the suction-side wall and the pressure-side wall (206, 204) are joined by a structure (302, 502) that is deformable under the action of aerodynamic pressures acting on the suction-side wall (204) and the pressure-side wall (206) when the aircraft (10) is in flight,
and **in that**:
- the suction-side wall (204) comprises a first part (204a) which extends downstream from the leading edge of the aerofoil extension, generally as far as the front third of the suction-side wall (204), the pressure-side wall (206) comprises a rigid part (206c) which extends upstream from the trailing edge of the aerofoil extension, generally as far as the front third of the pressure-side wall (206), the first part (204a) of the suction-side wall (204) and the rigid part (206c) of the pressure-side wall (206) being respectively made of a rigid material, the suction-side wall (204) further comprises a second part (204b), designated as a semirigid part, between the first part (204a) and the trailing edge of the aerofoil extension, having a stiffness below that of the first part (204a) of the suction-side wall (204), and the pressure-side wall (206) further comprises an extendable part (206d) which extends upstream from the rigid part (206c); or
- the pressure-side wall (206) comprises a first part (206a) which extends downstream from the leading edge generally as far as the front third of the pressure-side wall (206), the suction-side wall (204) comprises a rigid part (204c) which extends upstream from the trailing edge, generally as far as the front third of the pressure-side wall (204), the first part (206a) of the pressure-side wall and the rigid part (204c) being respectively made of a rigid material, the suction-side wall (206) further comprises a second part (206b), designated as a semirigid part, between the first part (206a) and the trailing edge of the aerofoil extension, having a stiffness below that of the first part (206a) of the pressure-side wall (206), and the suction-side wall (204) further comprises an extendable part (204d) that extends upstream from the rigid part (204c).

2. Wing (14) for an aircraft (10) according to Claim 1, **characterized in that** the extendable part (206d) of the pressure-side wall or the extendable part (204d) of the suction-side wall (204) is of the silicon type.

3. Wing (14) for an aircraft (10) according to Claim 1 or 2, **characterized in that** the semirigid part (204b, 206b) is made of an elastomeric material.

4. Wing (14) for an aircraft (10) according to one of Claims 1 to 3, **characterized in that** the semirigid part (204b, 206b) is made of a bi-laminate material.

5. Wing (14) for an aircraft (10) according to any one of the preceding claims, **characterized in that** the deformable structure (502) has at least two spars (502a-b), a first spar (502a) having a first end that is fixed in an articulated manner to the structural element (202) and a second end that is fixed in an articulated manner to the second part (204b) and to a first end of a second spar (502b), the second end of the second spar (502b) being fixed in an articulated manner to the pressure-side wall (206), and so on in pairs, and **in that** the length of each spar (502a-b) reduces as the temperature falls.

6. Wing (14) for an aircraft (10) according to one of Claims 1 to 4, **characterized in that** it comprises a spar (402) that is fixed by one end to the structural element (202) and by the other end to the level of the trailing edge, and **in that** the length of the spar (402) reduces as the temperature falls.

7. Wing (14) for an aircraft (10) according to any one of Claims 1 to 4, **characterized in that** the deformable structure (302) comprises a set of mutually parallel connecting rods (702), said connecting rods (702) comprising, at each end, a ball joint that is secured respectively to the pressure-side wall (206) and to the suction-side wall (204).
